# EUROPEAN PATENT APPLICATION

(11) **EP 1 737 000 A1**
(43) Date of publication of application: **27.12.2006**
(21) Application number: 05728933.2
(22) Date of filing: 06.04.2005
(51) Int. Cl.: H01B 13/00, H01B 1/06, H01M 8/02, H01M 8/10

(54) **ELECTROLYTE MEMBRANE, METHOD FOR PRODUCING MEMBRANE ELECTRODE ASSEMBLY, AND FUEL CELL**

(30) Priority: 08.04.2004 JP 2004114822
(71) Applicant: Toagosei Co., Ltd, Minato-ku, Tokyo 105-8419 (JP)
(72) Inventor: Hiraoka, Hideki c/o Toagosei Co., Ltd., Nagoya-shi Aichi;4550027 (JP)
(74) Representative: Pohlmann, Eckart
(86) International application number: PCT/JP2005/006737
(87) International publication number: WO 2005/098875

(57) **Abstract**

To eliminate problems such as insufficient adhesion of an electrode and flooding being easily caused in a fuel cell electrolyte membrane having a structure in which a porous substrate is filled with an electrolyte polymer, and to provide a fuel cell electrolyte membrane for which the productivity is high, which is inexpensive, and for which permeation of fuel is suppressed.

A method for producing an electrolyte membrane by filling pores of a porous substrate with an electrolyte polymer, the electrolyte membrane having the surface of the porous substrate exposed. In this production method, the polymer is obtained from an ion-exchange group-containing monomer, or a solution or a dispersion of the monomer with another component added as necessary.

## Description

The present invention relates to an electrolyte membrane, said electrolyte membrane being suitably used for an electrochemical device, and particularly for a fuel cell.

The performance of fuel cells, which are a type of electrochemical device employing a polymer electrolyte membrane, has improved outstandingly due to developments in electrolyte membranes and catalyst technology in recent years, and they have been attracting attention as a power source for low-emission automobiles or as a highly efficient power generation method. Among them, a fuel cell employing a polymer electrolyte membrane (solid polymer fuel cell) has a structure in which a reaction layer having an oxidation-reduction catalyst is formed on the surface of the membrane. In the solid polymer fuel cell, a reaction in which a hydrogen molecule is decomposed into protons and electrons occurs at a fuel electrode, the electrons thus generated operate an electric component and are carried to an oxygen electrode side via electric wires, and at the oxygen electrode water is generated from oxygen, protons, and electrons carried from the fuel electrode via the electric wires. Furthermore, in a direct methanol fuel cell (DMFC), methanol and water are supplied to a fuel electrode, and protons are taken out by reacting the methanol and water by means of a catalyst in the vicinity of a membrane. These fuel cells normally employ an electrolyte membrane formed from a polyperfluoroalkylsulfonic acid.

However, a polyperfluoroalkylsulfonic acid membrane has the problem that when it is used in a fuel cell in which a fuel solution is supplied directly to a cell, such as a direct methanol fuel cell, the fuel such as methanol penetrates the membrane, thus causing energy loss. Furthermore, since the membrane is swollen by the methanol, etc. fuel, and its area changes greatly, problems such as a joint between an electrode and the membrane peeling apart easily occur, and there is also the problem that the fuel concentration cannot be increased. Moreover, there are the economic problems that the material itself is expensive due to it containing fluorine atoms, and since the production process is complicated and the productivity is low the cost is very high.

Because of this, there has been a desire for a polymer electrolyte membrane formed from an inexpensive hydrocarbon skeleton, for which permeability to methanol is suppressed when used in a direct methanol fuel cell. An electrolyte membrane for a fuel cell disclosed in Patent Publication 1 is formed by filling a porous substrate with an inexpensive ion-exchange group-containing polymer (hereinafter, called an 'electrolyte polymer'); since the porous substrate is formed from a material that is resistant to deformation by an external force, such as polyimide or crosslinked polyethylene, excessive swelling of the electrolyte polymer with which the pores are filled by an aqueous solution of methanol can be prevented, and as a result, the permeability to methanol can be suppressed.

As a result of an investigation by the present inventors, it has been found that in a production process for such an electrolyte membrane a layer of the electrolyte polymer can also be easily formed on the surface of the porous substrate. Such an electrolyte polymer on the surface easily makes electrolyte in the interior of an electrode contact electrolyte within the electrolyte membrane, and there is the advantage that transfer of hydrogen ion, etc. is facilitated. On the other hand, since it is easily swollen by the aqueous solution of methanol used as a fuel or moisture generated in a cell reaction, thus degrading the strength, there is the problem that a joint between the electrode and the membrane easily peels apart.

Furthermore, since compared with the above-mentioned perfluoroalkylsulfonic acid-based electrolyte membrane having a water-repellent skeleton as a main component the electrolyte polymer layer formed on the surface of the membrane retains moisture, water easily builds up in the vicinity of a catalyst layer, the catalyst is covered by water, a cell reaction is inhibited, and the so-called flooding state easily occurs. It is widely known that when a catalyst layer is in a flooding state, the cell output becomes unstable and greatly decreases. Furthermore, it has been confirmed by experiment by the present inventors that, when such a membrane that is susceptible to flooding is used, good performance cannot easily be obtained in power generation in which air, etc. having a low oxygen partial pressure is used as an oxidizing agent. As means for eliminating the flooding, the addition of a water-repellent material such as polytetrafluoroethylene microparticles to the interior of the electrode so as to improve the water discharge properties of the interior of the electrode has been proposed, but not all of the unwanted water can be discharged, and in order to compensate for this it is known that discharge is facilitated by increasing the amount of flow or the flow rate of an oxidant gas such as air or oxygen. Moreover, when the oxygen partial pressure is high as is the case for pure oxygen, a high output can be obtained even if slight flooding occurs. However, when a DMFC is used in a portable device, etc., the power supplied to a blower, etc. in order to obtain an amount of gas flow is limited, and since mounting a large-size blower or an oxygen cylinder in itself degrades the portability, it is difficult in practice to equip a portable device with a membrane that is susceptible to flooding. That is, when an electrolyte membrane having a structure in which pores of a porous substrate are filled with an electrolyte polymer is applied to a fuel cell, this is effective for the problem of permeability to methanol or swelling by methanol, which is a problem for a fluorine-based electrolyte membrane, but since there are problems with bonding properties to an electrode and flooding being easily caused, it is difficult for a fuel cell, etc. for a small-sized device to be equipped therewith.
(Patent Publication 1) Japanese unexamined patent application publication No. 2002-83612

The present invention has been carried out in order to eliminate problems such as insufficient adhesion of an electrode and flooding being easily caused in the above type of fuel cell electrolyte membrane having a structure in which a porous substrate is filled with an electrolyte polymer, and to provide a fuel cell electrolyte membrane for which the productivity is high, which is inexpensive, and for which permeation of fuel is suppressed.

The present invention solves the above-mentioned problems, and is a method for producing an electrolyte membrane by filling pores of a porous substrate with an electrolyte polymer, the electrolyte membrane having the surface of the porous substrate exposed. Furthermore, in this production method, the polymer is obtained from a monomer having an ion-exchange group, a functional group that can be converted into an ion-exchange group, or a site into which an ion-exchange group can be incorporated after polymerization (hereinafter, generally called an 'ion-exchange group-containing monomer'), or is obtained from a solution or a dispersion of this monomer with another component added as necessary (hereinafter, called a 'polymer precursor'). Furthermore, by using a hydrophobic material as the porous substrate, flooding in the interior of an electrode is reduced because of the hydrophobic surface being exposed on the membrane surface, thus improving cell performance.

The electrolyte membrane of the present invention enables the exposed porous substrate to be fusion-bonded to an electrode when bonding the electrode, the adhesion to an electrode is improved, and the adhesive state continues in a wet state while the cell is running. Furthermore, by removing electrolyte polymer adhering to the surface of a conventional membrane, moisture that had easily been retained between the electrolyte membrane and the catalyst layer is reduced, it becomes difficult for flooding to occur, and an outstanding effect in increasing the output when running by means of air can be obtained.

### Brief Description of Drawings

- (FIG. 1): A cross sectional view showing a state before peeling off a protecting film when preparing an electrolyte membrane by sandwiching a large amount of electrolyte polymer between the film and a substrate.
- (FIG. 2): A cross sectional view showing a state after the film is peeled off.
- (FIG. 3): A cross sectional view showing a state in which the membrane is immersed in water, the electrolyte polymer on the surface swells to thus increase its volume, and it is easily peeled off.
- (FIG. 4): A cross sectional view showing a state in which the electrolyte polymer on the surface has come off as a result of washing and the surface of the substrate is exposed.
- (FIG. 5): A cross sectional view showing a state before peeling off a protecting film in a step of forming an electrolyte membrane by sandwiching an electrolyte polymer together with a mesh between the protecting film and a substrate.
- (FIG. 6): A cross sectional view showing a state after the film is peeled off.
- (FIG. 7): A cross sectional view showing a state in which the membrane is immersed in water, and when the mesh is peeled off the electrolyte polymer on the surface peels off together with the mesh.
- (FIG. 8): A cross sectional view showing a state in which the electrolyte polymer on the surface has come off as a result of washing and the surface of the substrate is exposed.
- (FIG. 9): A cross sectional view showing a state before peeling off a protecting film in a step of forming an electrolyte membrane by strongly squeezing layers of the protecting film and a substrate sandwiched between rolls, etc., so as to remove a polymer precursor between the protecting film and the substrate.
- (FIG. 10): A cross sectional view showing a state in which the protecting film is peeled off and the membrane is wetted with water.
- (FIG. 11): A cross sectional view showing a residual state on the surface of the substrate of the electrolyte membrane after drying the above.
- (FIG. 12): A graph showing a current density - output density curve when oxygen is used as an oxidizing agent in Example 1 and Comparative Example 1.
- (FIG. 13): A graph showing a current density - output density curve when air is used as an oxidizing agent in Example 1 and Comparative Example 1.
- (FIG. 14): An electron microscope photograph of an electrolyte membrane formed in Example 1.

- (FIG. 15): An electron microscope photograph of an electrolyte membrane formed in Comparative Example 1.

### Explanation of Reference Numerals

- 1: Protecting film
- 2: Electrolyte polymer
- 3: Porous substrate
- 4: Electrolyte polymer that has swollen with water
- 5: Mesh

The electrolyte membrane of the present invention is formed by filling pores of a porous substrate, which is preferably formed from a hydrophobic thermoplastic resin having the property of fusion-bonding to an electrode under bonding conditions, with an electrolyte polymer, the surface of the porous substrate being exposed. Use of this membrane enables the bonding properties to an electrode to be improved, and the problem of flooding, that is, a catalyst layer in the electrode being clogged with water and the performance being degraded, can be alleviated. Furthermore, compared with a conventional fluorine-based electrolyte membrane, permeability to methanol can be suppressed. In addition, the filling of the pores of the porous substrate with an electrolyte polymer can be ascertained by measurement of proton conductivity, and the exposure of the surface can be ascertained by observation using an electron microscope. Details are explained below.

The porous substrate used in the present invention is preferably a material that has the property of softening or melting by heating and, in particular, a thermoplastic resin; more preferably it is a material for which there is substantially no swelling in methanol or water and, in particular, it is desirable that the change in area when wetted with water compared with when it is dry is small or almost none. The increase in area when the porous substrate is immersed in methanol or water changes depending on the immersion time and temperature, and in the present invention the increase in area when immersed in pure water at 25°C for 1 hour is preferably no greater than 20% compared with when it is dry.

When the porous substrate of the present invention is formed from a material having the property of softening or melting upon heating, in a thermocompression bonding step, which is normally carried out when bonding an electrode, the electrode may be bonded by softening or melting. The softening temperature in this process is appropriately selected according to the temperature at which the fuel cell is run, and it is necessary for it to be higher than a target fuel cell running temperature. That is, while taking into consideration the temperature range in which the solid polymer fuel cell is normally run, it is preferable for the softening temperature to be in the range of 40°C to 200°C. It is more preferably in the range of 50°C to 180°C, and more preferably 60°C to 150°C. When the softening temperature is too low, the temperature at which the fuel cell can run is limited, and since the fuel cell itself generates heat by a reaction, it cannot be used for a long period of time. Furthermore, it is not desirable for the softening temperature to be higher than this range since there is the problem that a functional group such as a sulfonic acid group within the electrolyte easily decomposes at the temperature at which pressing is carried out, or the problem that the electrolyte or carbon as a catalyst substrate is easily oxidized and degraded by the action of the catalyst within the electrode.

There are various methods for measuring softening temperature and, for example, a Vicat softening temperature defined in accordance with JIS K7206 may be employed. In the present invention, it is also possible to bond an electrode to a porous substrate in a molten state, but since the melting temperature is higher than the softening temperature, the melting point is not particularly specified.

The porous substrate used in the present invention is preferably formed from a hydrophobic material. Use of the hydrophobic material makes it difficult for unwanted water to build up at the interface between the membrane and the catalyst, and makes it difficult for flooding to occur, which easily causes a decrease in output during running of a fuel cell. Water contact angle or surface tension is often used as a measure of hydrophobicity, but since the substrate is a porous material, it is difficult to measure the contact angle, etc. as a material. Because of this, it can be assessed using a water contact angle obtained by a sheet which is molded the same material as that of the porous substrate. In this case, a preferred water contact angle is at least 30 degrees, more preferably at least 50 degrees, and yet more preferably at least 70 degrees. The water contact angle is expressed using numerical values of 0 degrees to 180 degrees, and since the greater this figure, the more that water is repelled, an upper limit is not specified.

With regard to the porous substrate of the present invention, the tensile modulus of elasticity is preferably 500 to 5000 MPa, and more preferably 1000 to 5000 MPa, and the breaking strength is preferably 50 to 500 MPa, and more preferably 100 to 500 MPa.

When they are lower than these ranges, the membrane easily deforms due to a force caused when the filled polymer tries to swell in methanol or water, and when they are higher than the above ranges, the substrate becomes too brittle and the membrane easily cracks during press-molding when bonding an electrode or during tightening, etc. when assembling into a cell. Furthermore, the porous substrate preferably has heat resistance to a fuel cell running temperature and resistance to external force so that it does not easily stretch.

Examples of materials having the above-mentioned properties include thermoplastic resins such as polyolefin, halogenated polyolefin, polysulfone, polyphenylene oxide, polyamide, and polyester, and polymers to which resistance to deformation such as stretching caused by an external force is imparted by a method such as drawing or crosslinking by exposing a polyolefin to radiation or addition of a crosslinking agent. These materials may be used singly or made into a composite by a method such as layering two or more types thereof.

Among these porous substrates, it is preferable to use one formed from a drawn polyolefin, a crosslinked polyolefin, or a polyolefin that has been crosslinked subsequent to drawing since they are readily available and the workability during a filling step is good. Among the polyolefins, those having polyethylene as a main component are excellent in terms of hydrophobicity, durability, availability, etc. Furthermore, those having improved water repellency as a result of introducing a copolymer component such as fluoroethylene to a polyolefin can be used preferably.

The porosity of the porous substrate of the present invention obtained as above is preferably 5% to 95%, more preferably 5% to 90%, and particularly preferably 20% to 80%. Furthermore, the average pore size is preferably in the range of 0.001 to 100 µm, and more preferably 0.01 to 1 µm. When the porosity is too small, the number of ion-exchange groups per unit area is too small and the output as a fuel cell is low, and when it is too large the membrane strength is undesirably degraded. Moreover, the thickness of the substrate is preferably no greater than 200 µm. It is more preferably 1 to 150 µm, yet more preferably 5 to 100 µm, and particularly preferably 5 to 50 µm. When the membrane thickness is too small, the membrane strength is degraded, and the permeation of methanol increases, and when it is too large, the membrane resistance becomes too large and the output of a fuel cell is too low, both being undesirable.

The electrolyte membrane of the present invention is formed by filling pores of a porous substrate with an electrolyte polymer. A method for filling with the polymer is not particularly limited, and it may be obtained by impregnating a porous substrate with a solution of a polymer or with a molten polymer, or by impregnating a porous substrate with a polymer precursor or a solution or dispersion thereof, followed by polymerization. In this process, the polymer precursor used for filling or the solution thereof, etc. may contain a cross-linking agent, a polymerization initiator, a catalyst, a curing agent, a surfactant, etc. as necessary. Furthermore, an ion-exchange group may be contained in advance in a monomer forming the polymer, or may be introduced by a step such as sulfonation after filling.

The electrolyte polymer with which pores of the porous substrate are filled in the present invention is not particularly limited, and a normally known one may be used. When a pre-polymerized polymer is used as the polymer, examples of polymers that can be used include polysulfone, polyether sulfone, polyether ketone, polyphenylene oxide, polyphenylene sulfide, polyamide, and polyimide, and an ion-exchange group may be introduced by a method such as sulfonation before or after filling.

Furthermore, in order to enhance the durability of the electrolyte membrane, it is preferable to improve adhesion between the porous substrate and the polymer used for filling, and because of this either irradiation with actinic energy beam such as radiation, an electron beam, or ultraviolet rays, or a treatment with plasma, ozone, or corona discharge, or a combination thereof may be carried out. Furthermore, a radical polymerization initiator that abstracts hydrogen may simply be attached to the surface. In this case, it is preferable to carry out attachment by contacting a solution of a radical generator in a solvent with the porous substrate and then removing the solvent since it then becomes uniformly attached to the interior of the pores.

As a filling polymer used in the present invention, a radically polymerizable polymer is preferably used, but in this case a protonic acid group-containing monomer is preferable as an ion-exchange group-containing monomer, which is a polymer precursor component, since the performance when used as a fuel cell electrolyte membrane is good. This monomer is a compound having a polymerizable functional group and a protonic acid in the molecule. Specific examples thereof include 2-(meth)acrylamido-2-methylpropanesulfonic acid, 2-(meth)acrylamido-2-methylpropanephosphonic acid, styrenesulfonic acid, (meth)allylsulfonic acid, vinylsulfonic acid, isoprenesulfonic acid, (meth)acrylic acid, maleic acid, crotonic acid, vinylphosphonic acid, and an acidic phosphoric acid group-containing (meth)acrylate.

Furthermore, a monomer having a functional group that can be converted into an ion-exchange group is a salt, anhydride, ester, etc. of the above-mentioned compounds. When the acid residue of the monomer used is in the form of a derivative such as a salt, anhydride, or ester, by converting it into a protonic acid form after polymerization, proton conductivity may be imparted.

Moreover, as a monomer having a site into which an ion-exchange group can be introduced after polymerization, a benzene ring-containing monomer such as styrene, α-methylstyrene, chloromethylstyrene, or t-butylstyrene may preferably be used. Examples of a method for introducing an ion-exchange group into the above monomers include a method involving sulfonation using a sulfonating agent such as chlorosulfonic acid, conc. sulfuric acid, fuming sulfuric acid, or sulfur trioxide.

'(Meth)acrylic' denotes 'acrylic and/or methacrylic', '(meth)allyl' denotes 'allyl and/or methallyl', and '(meth)acrylate' denotes 'acrylate and/or methacrylate'.

Among the above-mentioned compounds, a sulfonic acid group-containing vinyl compound or a phosphoric acid group-containing vinyl compound is preferable because of excellent proton conductivity, and 2-methylpropane-2-(meth)acrylamidosulfonic acid is more preferable due to high polymerizablility.

As a polymer precursor used in the present invention, a mixture of an ion-exchange group-containing monomer and a crosslinking agent is preferable. A compound that can be used as a crosslinking agent has at least two polymerizable functional groups per molecule, and by carrying out polymerization by mixing it with the above-mentioned protonic acid group-containing monomer or a salt thereof, etc. crosslinked sites are formed in a polymer, thus giving a polymer having a three-dimensional network structure, which does not dissolve or melt.

Specific examples thereof include *N,N*'-methylenebis(meth)acrylamide, polyethylene glycol di(meth)acrylate, polypropylene glycol di(meth)acrylate, trimethylolpropane diallyl ether, pentaerythritol triallyl ether, divinylbenzene, bisphenol di(meth)acrylate, isocyanuric acid di(meth)acrylate, tetraallyloxyethane, triallylamine, and a diallyloxyacetate.

Furthermore, the crosslinking functional group is not limited to those having a carbon-carbon double bond, and a di- or higher-functional epoxy compound, etc. may be used, although they are inferior since the polymerization reaction rate is low. When an epoxy compound is used, crosslinking may be carried out by a reaction with an acid such as a carboxyl group in the polymer, or a copolymerizable compound having a hydroxyl group, etc. may be added as a third component to the polymer precursor. These crosslinking agents may be used singly or in a combination of two or more types as necessary.

A third copolymerization component having no protonic acid group may be added to the polymer precursor used in the present invention as necessary in order to adjust swelling properties, etc. of the polymer. The third component is not particularly limited as long as it can copolymerize with the ion-exchange group-containing monomer and the crosslinking agent used in the present invention, and examples thereof include (meth)acrylic acid esters, (meth)acrylamides, maleimides, styrenes, vinyl organic esters, allyl compounds, and methallyl compounds.

In the present invention, a method for polymerizing the ion-exchange group-containing monomer of a polymer precursor within pores of the porous substrate is not particularly limited, but in the case of radical polymerization, as easy methods, irradiation with actinic energy beam such as an electron beam or ultraviolet rays, heating, etc. are preferably used.

Examples of radical polymerization initiators for thermally initiated polymerization or redox initiated polymerization that can be used in the above are as follows.

Azo compounds such as 2,2'-azobis(2-amidinopropane) dihydrochloride; peroxides such as ammonium persulfate, potassium persulfate, sodium persulfate, hydrogen peroxide, benzoyl peroxide, cumene hydroperoxide, and di-*t-*butylperoxide; a redox initiating agent formed by combination of the above-mentioned peroxide and a reducing agent such as a sulfite, a bisulfite, a thiosulfate, formamidinesulfinic acid, or ascorbic acid; and azo radical polymerization initiators such as 2,2'-azobis-(2-amidinopropane) dihydrochloride and azobiscyanovaleric acid. These radical polymerization initiators may be used singly or in a combination of two or more types.

Among the above-mentioned polymerization means, polymerization that is photoinitiated by ultraviolet rays is desirable since the polymerization reaction is easy to control and a desired electrolyte membrane is obtained with good productivity by a relatively simple process. Furthermore, when photoinitiated polymerization is carried out, it is more preferable to dissolve or disperse a radical photopolymerization initiator in a monomer or a solution or a dispersion thereof in advance.

Examples of the radical photopolymerization initiator include benzoin, benzil, acetophenone, benzophenone, thioxanthone, thioacridone, and derivatives thereof, which are generally used in ultraviolet polymerization, and specific examples thereof include benzophenone types such as methyl *o*-benzoylbenzoate, 4-phenylbenzophenone, 4-benzoyl-4'-methyldiphenylsulfide, 3,3',4,4'-tetra(t-butylperoxycarbonyl)benzophenone, 2,4,6-trimethylbenzophenone, 4-benzoyl-*N,N-*dimethyl-*N*-[2-(1-oxy-2-propenyloxy)ethyl]benzenemethanaminium bromide, (4-benzoylbenzyl)trimethylammonium chloride, 4,4'-dimethylaminobenzophenone, and 4,4'-diethylaminobenzophenone; thioxanthone types such as thioxanthone, 2-chlorothioxanthone, 2,4-diethylthioxanthone, and 2-ethylthioxanthone; thioacridone types such as thioacridone; benzoin types such as benzoin, benzoin methyl ether, benzoin isopropyl ether, benzoin ethyl ether, and benzoin isobutyl ether; acetophenone types such as acetophenone, propiophenone, diethoxyacetophenone, 2,2-dimethoxy-1,2-diphenylethan-1-one, 1-hydroxycyclohexyl phenyl ketone, 2-methyl-1-(4-(methylthio)phenyl)-2-morpholinopropane-1, 2-benzyl-2-dimethylamino-1-(4-morpholinophenyl)butan-1-one, 2-hydroxy-2-methyl-1-phenylpropan-1-one, and 1-(4-(2-hydroxyethoxy)-phenyl)-2-hydroxydi-2-methyl-1-propan-1-one; and benzil compounds such as benzil.

The amount of photopolymerization initiator used is preferably 0.001 to 1 mass % relative to the total mass of the ion-exchange group-containing monomer and the third component, which is an unsaturated monomer, more preferably 0.001 to 0.5 mass %, and particularly preferably 0.01 to 0.5 mass %. Among them, an aromatic ketone radical polymerization initiator such as benzophenone, thioxanthone, or thioacridone is preferable since it can generate a radical by abstracting hydrogen from a carbon-hydrogen bond and, when used in combination with an organic material such as a polyolefin as a porous substrate, it can form a chemical bond between the surface of the substrate and the polymer used for filling.

In the present invention, when impregnating the porous substrate with the polymer precursor, it is preferable to make a solution or a dispersion of the polymer precursor by mixing a monomer, a crosslinking agent, and a polymerization initiator, etc. as necessary to give a liquid, since it then becomes easy to carry out filling. When the polymer precursor is a liquid having a low viscosity, it can be used as it is for impregnation, but it is preferable to form a solution having a concentration of 10% to 90%, and more preferably 20% to 70%.

Furthermore, when a component that is insoluble in water is used, some or all of the water may be replaced with an organic solvent, but when an organic solvent is used, since it is necessary to remove all the organic solvent before joining an electrode, it is preferable to use an aqueous solution. The reason why impregnation is carried out using a solution is because impregnation into a porous substrate having fine pores is facilitated by the use of a solution in water or a solvent, and because forming a pre-swollen gel within a pore can exhibit an effect in preventing polymer within the pore from coming out due to the polymer being swollen too much by water or methanol when an electrolyte membrane thus formed is made into a fuel cell.

For the purpose of facilitating the impregnation procedure, a surfactant may be added to a solution of the polymer precursor, or application of ultrasonic waves during impregnation may be carried out.

The electrolyte membrane of the present invention has the surface of the porous substrate exposed on the surface, and a production process therefor is explained below.

As a simple method, a method in which, after carrying out filling, an electrolyte polymer layer formed on the surface is scraped off may be employed. As a method therein, a method involving rubbing with a brush, etc., or a method involving scraping off with a scraper, etc. may be used. Furthermore, in this case it is desirable to carry it out while making the electrolyte polymer attached to the surface swell by dampening the membrane with water. When the polymer layer strongly adheres to the surface, it can easily be removed by scraping off by dampening it with an alkaline aqueous solution of sodium hydroxide, potassium hydroxide, sodium carbonate, potassium carbonate, etc., but it is necessary to carry out washing with an acid afterward so as to convert an internal ion-exchange group into a protonic acid type.

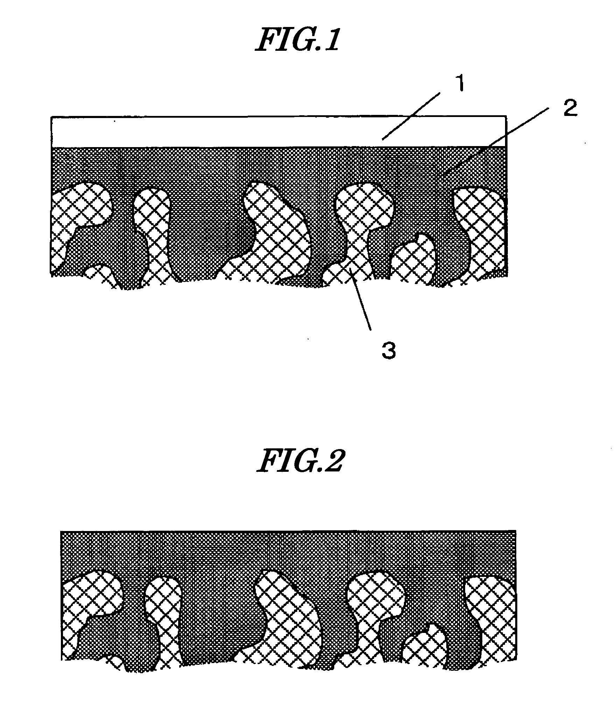

Furthermore, with regard to a method in which pores are filled with a radically polymerizable polymer precursor, followed by polymerization, it has been found that the surface can easily be exposed by the following method. That is, it is a method in which, among a step of filling pores of a porous substrate with a polymer precursor, a step of covering opposite faces with a protecting material, a polymerization step, a step of peeling off the protecting material and making the surface polymer layer swell, and a step of peeling off the swollen polymer layer, in the step of covering with a protecting material, the porous substrate and the protecting material are not put into intimate contact, but as shown in FIG. 1 a solution of the polymer precursor is made to be present therebetween.

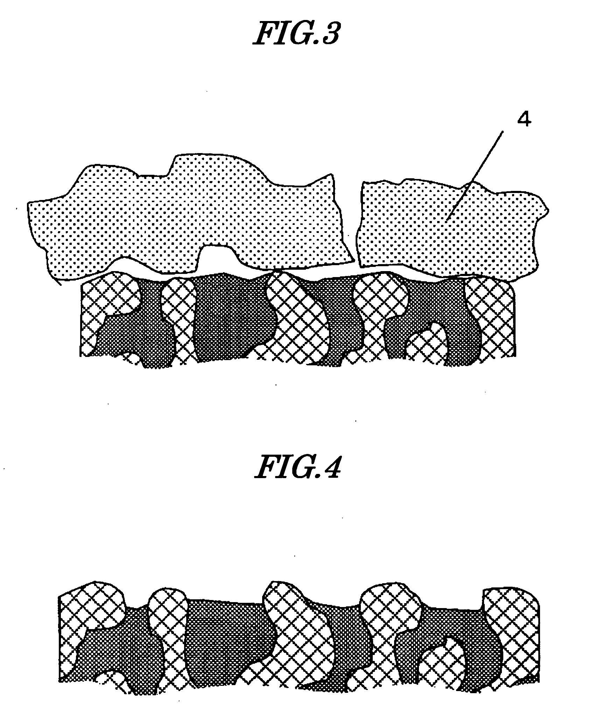

As described above, when the polymer precursor remains between the porous substrate and the protecting material, as shown in FIG. 2, a membrane in which almost none of the porous substrate is exposed after polymerization is obtained, but once water adheres thereto, an electrolyte polymer gel that is thickly deposited on the surface absorbs water and swells; as shown in FIG. 3, the volume increases to thus make it very brittle, it easily peels off as a result of the application of a light degree of external force such as spraying with water, and as shown in FIG. 4, the surface of the porous substrate is exposed.

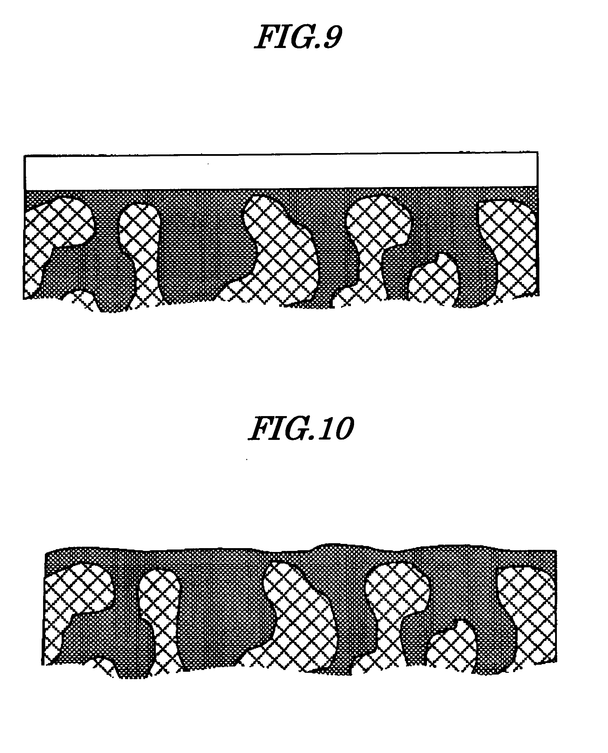

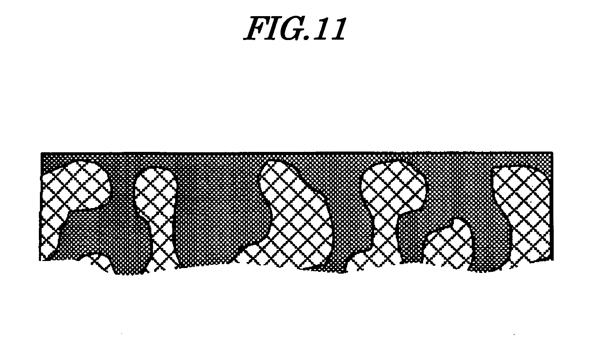

In this case, the gap between the porous substrate and the protecting material is preferably at least 5 µm on at least one side, and more preferably at least 10 µm. It has become clear from an experiment by the present inventors that when it is less than 5 µm, as shown in FIG. 9 to FIG. 11, the electrolyte polymer layer formed very thinly on the surface of the substrate does not greatly change in volume when swollen with water, and it cannot easily be removed unless it is strongly rubbed by means of a scraper, etc. In such a case, although it can be made easily peelable by immersing it in the above-mentioned alkaline aqueous solution, there is the problem that the number of steps increases. There is no particular upper limit for the gap between the porous substrate and the protecting material, but if it is too thick, since it becomes harder for ultraviolet rays, etc. to penetrate, and material is wasted, which is economically undesirable, it may be better for it to be no greater than 1 mm. In order to prevent any defects occurring in the electrolyte membrane, it is preferable to avoid the formation of any bubbles between the porous substrate and the protecting material.

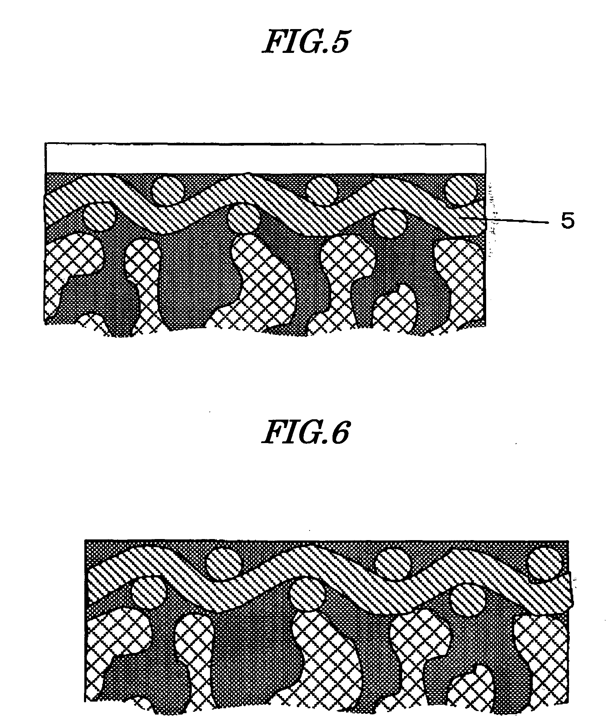

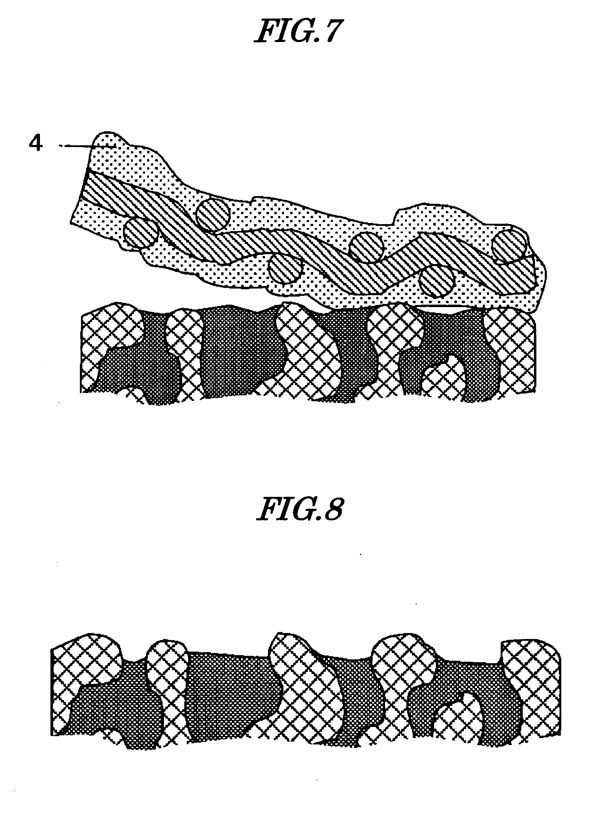

Moreover, it is preferable for the gap between the porous substrate and the protecting material to be maintained in the above-mentioned range, and as means therefor there can be used a method in which a material having a thickness greater than that of the porous substrate is interposed as a spacer on opposite faces of the porous substrate, a method in which a porous material, such as a mesh, that is coarser than the porous substrate is interposed between the porous substrate and the protecting material and polymerization is carried out, or a method in which, when rolls are used when sandwiching a porous substrate with a protecting material, the gap between the rolls is adjusted. With regard to the coarse porous material in this case, any material such as a nonwoven cloth, a woven cloth, a net, or a porous membrane may be used without particular restriction, but since the purpose of using this is to form a uniform electrolyte polymer layer between the porous substrate and the protecting material as described above, it is undesirable to use one having a pore size that is too small because it is difficult to form an electrolyte polymer layer in practice. A preferred pore size is at least 10 µm. As shown in FIG. 5 to FIG. 8, the method involving interposing a mesh, etc. is preferable since it has an effect of maintaining a constant gap between the porous substrate and the protecting material and ultraviolet rays and heat are transmitted uniformly, thus giving an electrolyte membrane free from uneven polymerization. Furthermore, as clearly shown in FIGS. 5 and 6, in the case of a mesh, since the contact area with the substrate is very small, the same effect as a case in which a thick gel is formed on the surface of the substrate is obtained, which is preferable. When sandwiching the porous substrate with the protecting material using rolls, the amount of electrolyte polymer present between the porous substrate and the protecting material can be adjusted by adjusting the gap between the rolls, but the amount of polymer might also be adjustable by means of the pressure at which the rolls are tightened together. In particular, when rubber rolls are used for sandwiching, even when the roll gap is made very small, the rolls themselves deform and this makes it easy for a polymer layer to remain between the porous substrate and the protecting material, and it is therefore possible to control the amount of electrolyte polymer on the surface of the porous substrate by adjustment of the pressure. In the method in which an electrolyte polymer is first formed thickly on the surface of the electrolyte membrane as above, surplus electrolyte polymer becomes brittle due to swelling by water, and it is easily peeled off by running water, sprayed water, a jet of air, etc., but a brush or a scraper may be used in combination.

The type of protecting material is not particularly limited as long as it can maintain a uniform thickness of a polymer layer or a polymer precursor layer between itself and the porous substrate, and when the polymer precursor is radically polymerizable, the protecting material has an effect in blocking oxygen in the air, which inhibits radical polymerization. Examples of the protecting material include glass or plastic; a plastic film is preferable since it is easy to handle, and a film such as PET, polyethylene, polypropylene, cellophane, or polycarbonate is more preferable. These protecting materials may be subjected to a surface treatment with a release agent such as a silicone.

The electrolyte membrane produced in the present invention may preferably be used in a solid polymer fuel cell and, in particular, in a direct methanol fuel cell. When the electrolyte membrane is used in such a fuel cell, an integrated membrane electrode assembly (MEA) may be produced by sandwiching the electrolyte membrane between two electrode sheets to which a catalyst represented by platinum has been applied, carrying out hot pressing, etc., and then incorporated. As a preferred method, there can be cited a method in which a layer containing a catalyst and as necessary a gas diffusion layer are laminated on the surface of the electrolyte membrane produced in the present invention, and the laminate is hot-pressed at a temperature that is equal to or higher than the softening temperature of the porous substrate forming the electrolyte membrane. The incorporation of an MEA into a fuel cell for actual use is widely known, and the electrolyte membrane of the present invention may be used by forming an MEA by the same method and incorporating it into a fuel cell.

The electrolyte membrane of the present invention is one in which the surface of a porous substrate, formed from a material that is hydrophobic and has the property of fusion-bonding upon heating, is exposed, and by contacting an electrode with this membrane and subjecting them to thermocompression bonding the electrode and the membrane are strongly bonded together. Furthermore, since the substrate is formed from a hydrophobic material and there is no surplus electrolyte polymer layer on the surface, hardly any water builds up in the vicinity of the interface between the electrolyte membrane and the electrode, and reduction in the output due to flooding is suppressed.

### Examples

### (Example 1)

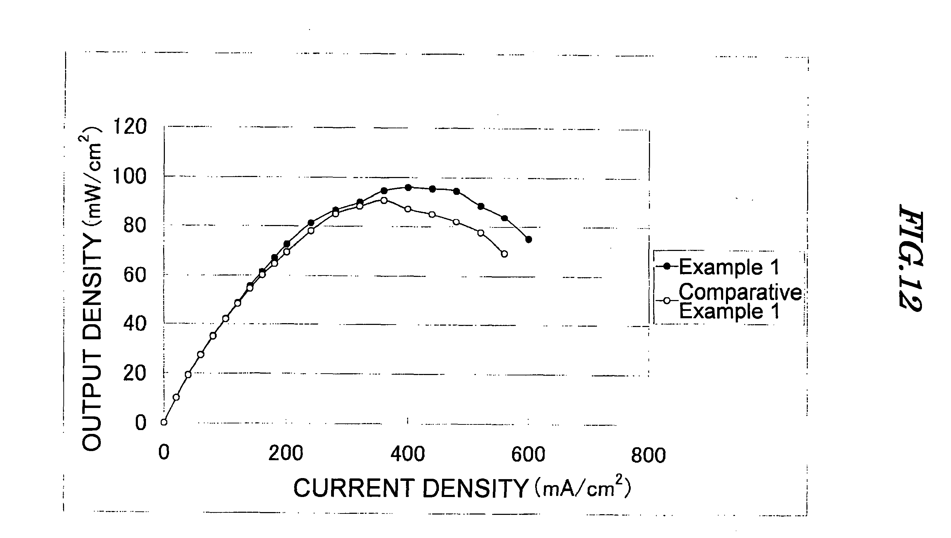

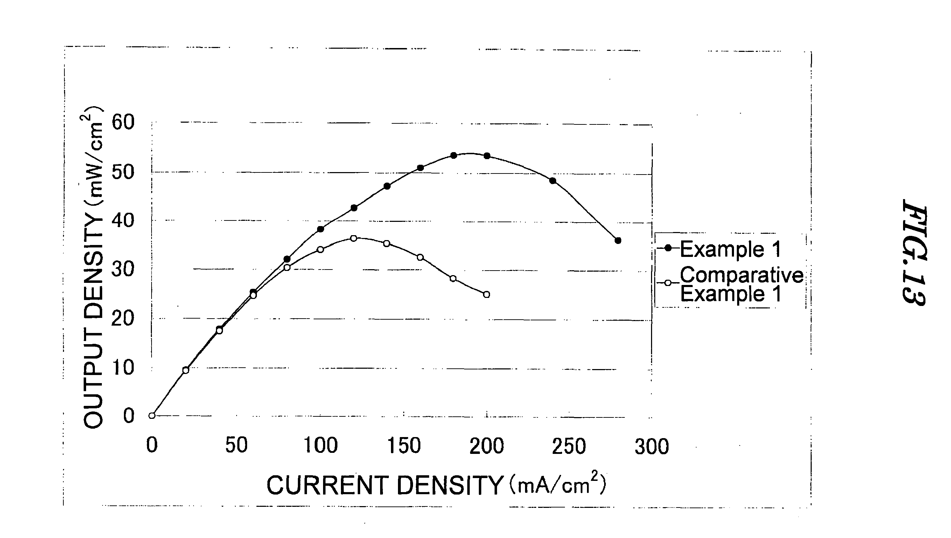

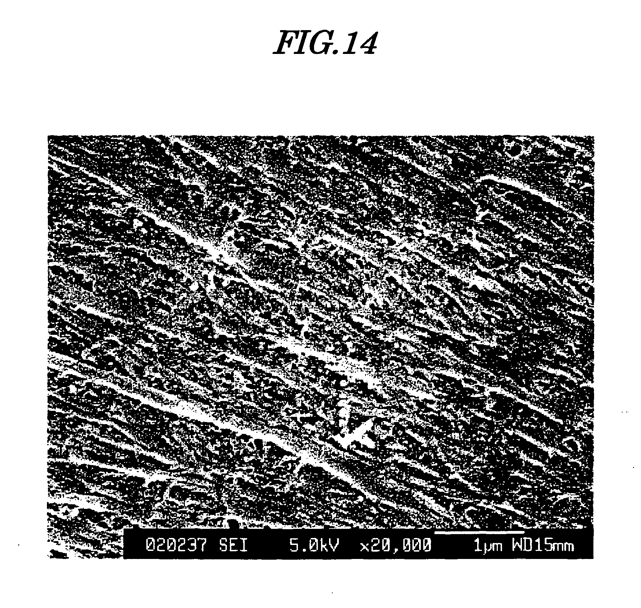

A crosslinked polyethylene porous substrate (thickness 16 µm, porosity 40%, average pore size about 0.1 µm) was immersed in a polymer precursor aqueous solution formed from 50 g of 2-acrylamido-2-methylpropanesulfonic acid, 5 g of N,N'-methylenebisacrylamide, 0.005 g of a nonionic surfactant, 0.005 g of a UV radical generator, and 50 g of water, thereby filling it with the aqueous solution. Subsequently, the porous substrate was withdrawn from the solution, and sandwiched between 50 µm thick PET films so that no bubbles were formed. In this process, a polymer precursor layer was formed between the surface of the porous substrate and the PET film while taking care not to squeeze out too much of the polymer precursor solution attached to the surface. Subsequently, the front and back sides were irradiated with ultraviolet rays at 1000 mJ/cm² using a high pressure mercury lamp. After irradiation, the thickness between the top and bottom PET films was measured, and the thickness of the polymer layer formed between the PET film and the porous film was thus determined as being 13 to 74 µm. When the PET film was peeled off, polymer on the surface exposed to running water absorbed water to thus increase in volume, and peeled off as an agar-like gel. The remaining attached polymer was removed by passing over the surface using a plastic spatula, and the membrane was dried naturally to give an electrolyte membrane. The proton conductivity, the permeability to methanol, and the adhesion to an electrode of this electrolyte-membrane were measured by methods that are described separately, and are summarized in Table 1. The membrane thus obtained was sandwiched between catalyst-equipped electrodes and hot-pressed to give an MEA, evaluation as a direct methanol fuel cell was carried out, and good power generation performance was exhibited. These evaluation results are summarized in Table 1. Among the evaluation results for cell performance, a current density - output density curve when oxygen was used as an oxidizing agent is shown in FIG. 12, and a graph of a current density - output density curve when air was used as an oxidizing agent is shown in FIG. 13, both being shown together with Comparative Example 1. This electrolyte membrane showed a high degree of exposure of the substrate in an electron microscope photographic enlargement of the surface (FIG. 14).

### (Example 2)

An impregnation operation was carried out in the same manner as in Example 1 using the polymer precursor aqueous solution and the crosslinked polyethylene porous substrate. Two sheets of approximately 100 µm thick polyester mesh were further prepared and impregnation was carried out by immersion in the same polymer precursor. They were layered together with 50 µm thick PET film to give five layers with the polyester mesh on opposite faces of the porous substrate, and the PET film outside the polyester mesh. This was passed between two stainless rolls to thus squeeze out surplus liquid. Following this, in the same manner as in Example 1 ultraviolet rays were applied and the PET film and the polyester mesh were peeled off. Subsequently, when this membrane was put under running water, the polymer attached to the surface in a mesh pattern swelled and peeled off. Remaining attached polymer was removed by going over the surface with a plastic spatula, and the membrane was dried naturally to give an electrolyte membrane. The proton conductivity, the permeability to methanol, and the adhesion to an electrode of this electrolyte membrane were measured by methods that are described separately, and are summarized in Table 1. The membrane thus obtained was sandwiched between catalyst-equipped electrodes and hot-pressed to give an MEA, evaluation as a direct methanol fuel cell was carried out, and good power generation performance was exhibited. These evaluation results are summarized in Table 1.

### (Example 3)

An impregnation operation was carried out in the same manner as in Example 1 using the polymer precursor aqueous solution and the crosslinked polyethylene porous substrate. This membrane was sandwiched between two sheets of PET film and then between two stainless rolls to thus squeeze out surplus liquid. The polymer precursor was polymerized by irradiation with ultraviolet rays in the same manner as in Example 1. After irradiation, the thickness between the top and bottom PET films was measured, and the thickness of the polymer layer formed between the PET film and the porous film was thus determined as being 2 to 3 µm. This membrane was neutralized by immersion in a 1% aqueous solution of sodium hydroxide and put under running water, the surface was rubbed with a plastic spatula, washed a few times with 1 N hydrochloric acid to thus convert ion-exchange groups into acid types, and washed with distilled water. Finally, this membrane was dried naturally to give an electrolyte membrane. The proton conductivity, the permeability to methanol, and the adhesion to an electrode of this electrolyte membrane were measured by methods that are described separately, and are summarized in Table 1. The membrane thus obtained was sandwiched between catalyst-equipped electrodes and hot-pressed to give an MEA, evaluation as a direct methanol fuel cell was carried out, and good power generation performance was exhibited. These evaluation results are summarized in Table 1.

### (Example 4)

An electrolyte membrane was obtained in the same manner as in Example 1 except that as the porous substrate a drawn polyethylene porous substrate (thickness 18 µm, porosity 48%, average pore size about 0.2 µm) was used. The proton conductivity, the permeability to methanol, and the adhesion to an electrode of this electrolyte membrane were measured by methods that are described separately, and are summarized in Table 1. The membrane thus obtained was sandwiched between catalyst-equipped electrodes and hot-pressed to give an MEA, evaluation as a direct methanol fuel cell was carried out, and good power generation performance was exhibited. These evaluation results are summarized in Table 1.

### (Example 5)

An electrolyte membrane was obtained in the same manner as in Example 1 except that a polytetrafluoroethylene porous substrate (thickness 20 µm, porosity 50%, average pore size about 0.2 µm) was used as the porous substrate. The proton conductivity, the permeability to methanol, and the adhesion to an electrode of this electrolyte membrane were measured by methods that are described separately, and are summarized in Table 1. The membrane thus obtained was sandwiched between catalyst-equipped electrodes and hot-pressed to give an MEA, evaluation as a direct methanol fuel cell was carried out, and the output was low. When the membrane electrode assembly was taken out, since the adhesion between the electrode and the membrane was poor, the electrode peeled off. These evaluation results are summarized in Table 1.

### (Comparative Example 1)

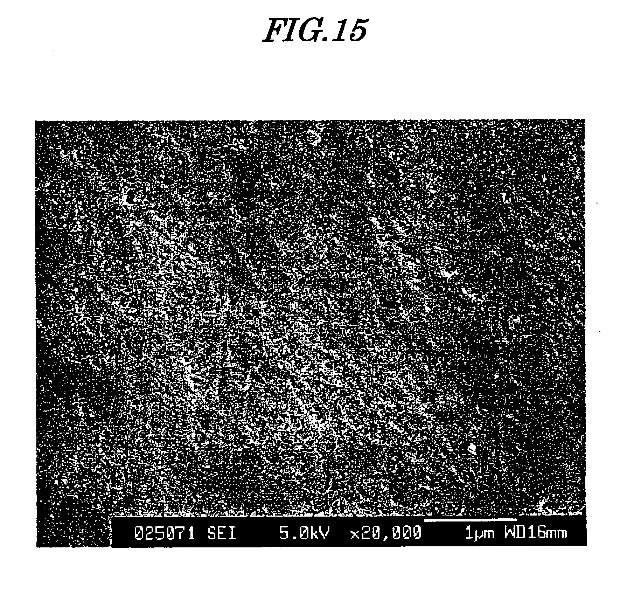

An impregnation operation was carried out in the same manner as in Example 1 using the polymer precursor aqueous solution and the crosslinked polyethylene porous substrate. This membrane was sandwiched between two sheets of PET film and then between two stainless rolls to thus squeeze out surplus liquid. The polymer precursor was polymerized by irradiation with ultraviolet rays in the same manner as in Example 1. After irradiation, the thickness between the top and bottom PET films was measured, and the thickness of the polymer layer formed between the PET film and the porous film was thus determined as being 2 to 3 µm. When this membrane was put under running water, there was no sign of the gel peeling off, and it was dried naturally as it was to give an electrolyte membrane. The proton conductivity, the permeability to methanol, and the adhesion to an electrode of this electrolyte membrane were measured by methods that are described separately, and are summarized in Table 1. The membrane thus obtained was sandwiched between catalyst-equipped electrodes and hot-pressed to give an MEA, and evaluation as a direct methanol fuel cell was carried out. When oxygen was used as an oxidizing agent, the same maximum output as in Example 1 was obtained, but the performance was unstable at high current density. When power was generated by switching the oxidizing agent to air, only a low output was obtained compared with the result of Example 1 where power was generated under the same conditions. These evaluation results are summarized in Table 1. When the adhesion strength was measured for the electrolyte membrane of this Comparative Example with an electrode thermocompression bonded to one side thereof, most of the membrane peeled off on immersion in water for 1 hour, and measurement could not be carried out. Among the evaluation results for cell performance, a current density - output density curve when oxygen was used as an oxidizing agent is shown in FIG. 12, and a graph of a current density - output density curve when air was used as an oxidizing agent is shown in FIG. 13, both being shown together with Example 1. This electrolyte membrane showed almost no exposure of the substrate in an electron microscope photographic enlargement of the surface (FIG. 15).

### (Method for evaluating performance of fuel cell)

### (1) Formation of MEA

As an oxygen electrode a platinum-supporting carbon (TEC10E50E, manufactured by Tanaka Kikinzoku Kogyo K.K.) was used, and as a fuel electrode a platinum ruthenium alloy-supporting carbon (TEC61 E54, manufactured by Tanaka Kikinzoku Kogyo K.K.) was used. These catalyst powders were mixed with an electrolyte polymer solution (Nafion 5% solution, manufactured by DuPont) and a polytetrafluoroethylene dispersion and stirred while adding water as appropriate to give a reaction layer coating solution. This was printed on one side of a carbon paper (TGP-H-060, manufactured by Toray Industries, Inc.) by a screen printing method and dried to give an electrode. In this process, the amount of platinum on the oxygen electrode side was 1 mg/cm², and the total amount of platinum and ruthenium on the fuel electrode side was 3 mg/cm². They were superimposed on a central area of the electrolyte membrane with the coated side as the inside, and hot-pressed at 120°C to give a fuel cell membrane electrode assembly (MEA). This was incorporated into a single fuel cell, the cell was run, and the performance was ascertained.

### (2) Evaluation of fuel cell

An MEA formed in Examples and Comparative Examples was incorporated into a single direct methanol fuel cell, and the cell was run under the following running conditions. Fuel was a 3 mol % aqueous solution of methanol, and the oxidizing agents were pure oxygen and air. The cell temperature was 50°C. The current density output characteristics were measured by changing the load by means of an electron loader.

### (3) Water contact angle of material forming porous substrate

A porous substrate was sandwiched between polyfluoroethylene films, it was hot-pressed into a film at a temperature equal to or higher than the melting temperature, and a water contact angle at 25°C was determined by a standard method.

### (4) Adhesion between electrode and membrane

An electrode formed in (1) was superimposed on only one side of an electrolyte membrane, and they were bonded by hot pressing at 120°C. This was formed into a strip having a width of 1 cm and a length of 5 cm, and the electrode side was affixed to a rigid plastic plate support having a width of 2 cm and a length of 6 cm via double-sided tape. One end of the membrane test piece thus prepared was peeled off a little and set in a tensile strength tester, and a 90 degree peel test was carried out at a peel speed of 50 mm/min. Furthermore, the test piece was immersed in water at 25°C for 1 hour, and the adhesion strength when wet with water was also measured.

### (5) Proton conductivity

An electrolyte membrane that had swollen after being immersed in pure water at 25°C for 1 hour was sandwiched between two platinum plates to give a measurement sample. Measurement of AC impedance from 100 Hz to 40 MHz at 25°C was then carried out to give the conductivity. The higher the conductivity, the easier it is for protons to move in the electrolyte membrane, thus exhibiting its excellence in application to a fuel cell.

### (6) Permeability to methanol

An immersion experiment at 25°C was carried out as follows. An electrolyte membrane was sandwiched between glass cells, one of the cells was charged with a 10 mass % aqueous solution of methanol, and the other cell was charged with pure water. The amount of methanol that had permeated to the pure water side was measured over time by gas chromatography, and a permeability coefficient when a steady state was attained was measured. The lower the permeability coefficient, the harder it is for methanol to penetrate through the electrolyte membrane, thus exhibiting its suitability in application to a fuel cell.

**(Table 1)**

| | | Units | Ex. 1 | Ex. 2 | Ex. 3 | Ex. 4 | Ex. 5 | Comp. Ex. 1 |
|---|---|---|---|---|---|---|---|---|
| Water contact angle of porous substrate | | Degrees | 96 | 96 | 96 | 102 | 110 | 96 |
| Softening temperature of substrate | | °C | 85 | 85 | 85 | 76 | >200 | 85 |
| Proton conductivity | | S/cm² | 28 | 28 | 28 | 40 | 31 | 29 |
| Methanol permeation flow flux | | kg/m²/h | 0.39 | 0.41 | 0.41 | 0.56 | 0.67 | 0.42 |
| Adhesion to electrode | When dry | N/cm | 0.21 | 0.22 | 0.19 | 0.18 | 0.05 | 0.11 |
| | After immersion in water | | 0.21 | 0.21 | 0.16 | 0.17 | 0 | 0 |
| Maximum cell output | Measurement with oxygen (A) | mW/cm² | 96 | 95 | 92 | 105 | 74 | 91 |
| | Measurement with air (B) | | 54 | 56 | 48 | 61 | 30 | 36 |
| | (A) - (B) | | 42 | 39 | 44 | 44 | 44 | 55 |

| | | | | | | | | |
|---|---|---|---|---|---|---|---|---|
| * The water contact angle of a porous substrate was measured for the surface of the porous substrate formed into a sheet by hot pressing at 150°C. | | | | | | | | |

When the electrolyte membrane obtained by the production method of the present invention is applied to a fuel cell, since it is difficult for water to build up in the vicinity of a catalyst layer, even when the oxygen partial pressure is low, etc., the performance is high, there is also the advantage that high performance can easily be maintained due to high adhesion to an electrode, permeability to methanol can be suppressed because of a structure in which a porous substrate is filled with an ion-exchange polymer, and it is resistant to swelling by fuel. Because of these advantages, it is extremely useful as an electrolyte membrane for a solid polymer fuel cell such as a direct methanol fuel cell.

## Claims

1. A method for producing an electrolyte membrane having a structure in which pores of a porous substrate are filled with an ion-exchange group-containing polymer and the surface of the porous substrate is exposed, the method comprising steps (a) to (c) below.
(a) A step of filling pores of the porous substrate with the ion-exchange group-containing polymer and forming a layer of the polymer on the surface.
(b) A step of making the polymer layer formed on the surface swell.
(c) A step of removing the swollen polymer layer on the surface of the porous substrate while leaving the ion-exchange group-containing polymer within the pores of the porous substrate.

2. A method for producing an electrolyte membrane having a structure in which pores of a porous substrate are filled with an ion-exchange group-containing polymer and the surface of the porous substrate is exposed, the method comprising steps (d) to (h) below.
(d) A step of impregnating the porous substrate with a monomer having an ion-exchange group, a functional group that can be converted into an ion-exchange group, or a site into which an ion-exchange group can be incorporated after polymerization; an ion-exchange group-containing polymer, or a solution or a dispersion thereof.
(e) A step of sandwiching opposite faces of the impregnated porous substrate with a protecting material, and filling a space sandwiched by the protecting material with the monomer, the polymer, or a solution or a dispersion thereof.
(f) A step of polymerizing the monomer when it is used.
(g) A step of peeling off the protecting material and making a polymer layer present on the surface of the porous substrate swell.
(h) A step of removing the swollen polymer layer on the surface of the porous substrate while leaving the ion-exchange group-containing polymer within the pores of the porous substrate.

3. The method for producing an electrolyte membrane according to Claim 2, wherein the step (e) comprises the following steps.
(1) A step of sandwiching opposite edges of the impregnated porous substrate with a material that is thicker than the porous substrate as a spacer to form an assembly, and further sandwiching opposite faces of this assembly with a protecting material, or (2) a step of, when sandwiching opposite faces of the impregnated porous substrate with a protecting material, filling a space sandwiched by the protecting material with a porous material and the monomer, the polymer, or a solution or a dispersion thereof, by the use of rollers with an adjusted roll gap.

4. A method for producing an electrolyte membrane having a structure in which pores of a porous substrate are filled with an ion-exchange group-containing polymer and the surface of the porous substrate is exposed, the method comprising steps (i) to (m) below.
(i) A step of impregnating the porous substrate with a monomer having an ion-exchange group, a functional group that can be converted into an ion-exchange group, or a site into which an ion-exchange group can be incorporated after polymerization; an ion-exchange group-containing polymer, or a solution or a dispersion thereof.
(j) A step of laminating on the surface of the impregnated porous substrate a porous material having cavities that have a larger average size that that of the pores of the porous substrate, sandwiching opposite faces of this laminate with a protecting material, and filling a space sandwiched by the protecting material with the porous material, and the monomer, the polymer, or a solution or a dispersion thereof.
(k) A step of polymerizing the monomer when it is used.
(l) A step of peeling off the protecting material and making a polymer present on the surface of the porous substrate swell.
(m) A step of peeling off the porous material and removing the swollen polymer on the surface of the porous substrate while leaving the ion-exchange group-containing polymer within the pores of the porous substrate.

5. The method for producing an electrolyte membrane according to any one of Claims 1 to 4, wherein the thickness of the ion-exchange group-containing polymer layer formed on the surface of the porous substrate or the thickness of the polymer present between the porous substrate and the protecting material is at least 5 µm.

6. The method for producing an electrolyte membrane according to any one of Claims 1 to 5, wherein the porous substrate is formed from a thermoplastic material and has a softening temperature of at least 50°C but less than 200°C.

7. The method for producing an electrolyte membrane according to any one of Claims 1 to 6, wherein the porous substrate is formed from a hydrophobic material, and the hydrophobic material has a water contact angle of at least 30 degrees.

8. The method for producing an electrolyte membrane according to any one of Claims 1 to 7, wherein the material of the porous substrate is a polyolefin.

9. A method for producing a membrane electrode assembly, the method employing the electrolyte membrane obtained by the production method according to any one of Claims 1 to 8 and comprising steps (n) to (o) below.
(n) A step of laminating a layer containing a catalyst and as necessary a gas diffusion layer on the surface of the electrolyte membrane surface obtained by the production method according to any one of Claims 1 to 8.
(o) A step of hot-pressing the laminate at a temperature equal to or higher than the softening temperature of the porous substrate forming the electrolyte membrane.

10. A fuel cell formed by incorporating a membrane electrode assembly obtained by the production method according to Claim 9.
